(19) Europäisches Patentamt
European Patent Office
Office européen des brevets

(11) Publication number: 0 215 518 B1

(12) # EUROPEAN PATENT SPECIFICATION

(45) Date of publication of the patent specification: 25.07.90

(51) Int. Cl.[5]: C08L 57/10

(21) Application number: 86201533.6

(22) Date of filing: 08.09.86

(54) **Composition based on an aqueous dispersion of an addition polymer.**

(30) Priority: 10.09.85 NL 8502464

(43) Date of publication of application: 25.03.87 Bulletin 87/13

(45) Publication of the grant of the patent: 25.07.90 Bulletin 90/30

(84) Designated Contracting States: AT BE CH DE FR GB IT LI NL SE

(56) References cited: US-A- 3 649 582

The file contains technical information submitted after the application was filed and not included in this specification

(73) Proprietor: DSM RESINS BV, Ceintuurbaan 5, NL-8022 AW Zwolle(NL)

(72) Inventor: Pons, Dick Adriaan, Fazanztstrasse 55, NL-3145 CA Maassluis(NL)
Inventor: van Hout, Johannes Barend, Industrieweg 60 C.A.B. Bouira, NL-3941 CC Rotterdam(NL)
Inventor: Sep, Waltherus Jacobus, Kortenburglaan 7, NL-3941 HP Doorn(NL)

(74) Representative: Hoogstraten, Willem Cornelis Roeland et al, OCTROOIBUREAU DSM Postbus 9, NL-6160 MA Geleen(NL)

EP 0 215 518 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention relates to a composition based on an aqueous dispersion of an addition polymer of one or more olefinically unsaturated monomers, an emulsion stabilizer and/or an emulsifier and a silicon compound. Optionally, the composition may contain other usual additives.

In the Netherlands patent 173974 adhesives are described that consist of polymeric binding agents, fillers and water, with the polymeric binding agents comprising certain alkoxysilane compounds. These silicon compounds are added during the polymerization and are incorporated into the polymer molecule. The wet tensile strength of these adhesives is insufficient.

The object of the invention is to provide a composition based on an aqueous dispersion of an addition polymer of one or more olefinically unsaturated monomers, an emulsion stabilizer and/or an emulsifier and a silicon compound which adheres well to mineral and organic substrates, particularly also under wet conditions.

The composition according to the invention provides a solution to this problem and is characterized in that the addition polymer comprises epoxy groups and that the silicon compound used is an amino-silane with the formula:

$$X - R^1 - Si \begin{cases} R^2 \\ R^3 \\ R^4 \end{cases}$$

where:
$X = NH_2$ or $-NH\text{-alkyl}(C_1\text{-}C_4)\text{-}NH_2$
$R^1$ = alkyl ($C_1$-$C_4$) or phenyl
$R^2$ = alkoxy ($C_1$-$C_4$),
alkyl ($C_1$-$C_4$) or phenyl
$R^3$ and $R^4$ = alkoxy ($C_1$-$C_4$) or OH.

According to a preferred embodiment of the invention, the relative amount of monomer units containing epoxy groups in the addition polymer is between 0.1 and 10 % (wt), preferably between 2 and 6 %(wt), based on the addition polymer.
According to a further preferred embodiment of the invention, 0.1-5 %(wt), preferably 0.1-1.5 %(wt), of aminosilane, based on the addition polymer, is used.

According to another preferred embodiment of the invention, the aminosilane used is an aminosilane with the formula:

$$X - R^1 - Si \begin{cases} R^2 \\ R^3 \\ R^4 \end{cases}$$

where:
$X = NH_2$,
$R^1$ = alkyl ($C_1$-$C_4$) and
$R^2 = R^3 = R^4$ = alkoxy ($C_1$-$C_4$)
Examples of suitable aminosilanes are gamma-aminopropyltriethoxysilane, N-(beta-aminoethyl)-gamma aminopropyltrimethoxysilane, gamma-aminopropyltrimethoxysilane and gamma-aminopropylmethyldiethoxysilane.

The aminosilane used is preferably gamma-aminopropyltriethoxysilane.

It is noted that US-A-3649582 does mention the addition of aminosilanes to dispersions, but, contrary to the dispersions in the invention, these dispersions contain no epoxy groups. Nor does US-A-3649582 mention adhesives or coating materials as applications.

The aqueous dispersions of the addition polymers can be prepared via processes as described in the Netherlands patents 160278 and 161769.

The monomers used in the addition polymers according to the invention consist wholly or largely of monomers which do not contain any reactive groups other than the ethylenic unsaturation. Examples of these are the alkylacrylates, alkylmethacrylates, dialkylmaleates dialkylfumarates, vinyl esters such as vinyl acetate, vinyl propionate, vinyl butyrate, vinyl pivalate, vinyl-2-ethylhexoate, vinyl stearate, vinyl laurate and/or vinyl versatate, vinyl ethers, vinyl chloride, alkenes such as ethylene, propylene or isobutene, butadiene, styrene, vinyltoluene, alphamethylstyrene or acrylonitrile. Mixtures of these monomers can also be used.
Examples of such monomers are acrylic acid, methacrylic acid, fumaric acid, maleic acid, crotonic acid, itaconic acid, hydroxyethylacrylate, hydroxyethylmethacrylate, hydroxypropylmethacrylate, ethyleneglycolmonoallylether, N-methylolacrylamide, N-methylolmethacrylamide, n-butoxymethylacrylamide,

acrylamidopropanesulphonic acid, n-butoxymethylmethacrylamide, glycidylacrylate, glycidylmethacrylate, allylglycidylether and vinylsulphonic acid.

In amounts up to 10 %(wt) at most alkenically polyunsaturated monomers, such as triallylcyanurate, divinylmaleate, divinyladipate, vinylcrotonate and ethyleneglycoldiacrylate ester, can be used.

According to a preferred embodiment of the invention, the applied addition polymer that contains epoxy groups is styreneacrylate copolymer.

According to another prefered embodiment of the invention, the applied monomer containing epoxy groups is glycidylacrylate or glycidylmethacrylate.

The addition polymer may be in the form of a dispersion powder or in the form of an aqueous dispersion.

As catalyst systems for the polymerization of the olefinically unsaturated monomers initiators can be used which dissolve either in the aqueous phase or in the monomer or in both. Examples of suitable types of compounds are persulphates, hydrogen peroxides and organic peroxides, such as hydroperoxides and azo compounds, whether or not in combination with reductants. Depending on the nature of the monomers and on the desired properties of the polymer and on the desired size of the polymer particles, various kinds of emulsifiers can be used either separately or in combination. Generally both anionic and nonionic emulsifiers can be used. Optionally, protective colloids can also be used. In many cases a mixture of an anionic and a preponderantly non-ionic emulsifier is the most satisfactory. A few examples of suitable classes of compounds are alkylbenzene-sulphonates and alkyl ($C_{10}$-$C_{18}$) sulphates, mono/dialkylphosphates, ($C_{10}$-$C_{18}$) fatty acid salts, polyglycolethers of ($C_8$-$C_{18}$) alcohols or alkylphenols and block polymers of ethylene oxide and propylene oxide. The amount of emulsifier or combination of emulsifiers used depends on the type of monomer and on the type of emulsifier.

Generally, an amount between 0.1 and 10 %(wt) is used, based on the total amount of solid, and more specifically an amount between 0.5 and 5 %(wt).

The polymerization can be effected in various ways. For instance by first producing a pre-emulsion of the monomers and a part of the total amount of water and emulsifiers and subsequently starting the polymerization by means of a catalyst whereas the metering time of the pre-emulsion and the catalyst is between 2 and 5 hours. On the other hand, it is possible to first polymerize part of the monomers in emulsion and to add more monomers stepwise, separately or mixed. In addition, it is possible to first polymerize a monomer or a combination of monomers of a certain type and to subsequently add other monomers or combinations of monomers, so that polymer particles with a laminated structure are formed. The concentration of epoxygroups can be different for each layer, for instance, with a high concentration of epoxygroups on the outside of the particle and a low concentration in the centre of the particle. A survey of various polymerization methods is to be found in the Netherlands patent application 7309796.

The reaction temperature during the polymerization may be between -15 °C and 100 °C, preferably between 20 °C and 90 °C. If the polymerization is carried out below 0 °C, an antifreeze like ethyleneglycol must be added.

During the polymerization other compounds may also be present, for instance chain length regulators, such as mercaptans, and buffers, such as sodium bicarbonate. In addition, substances like plasticizers, crosslinking agents, flow-promoting agents, thickeners, colourants or pigments, may be present during the polymerization or be added after the polymerization. The pH of the dispersion can be adjusted with ammonia, amines or lye.

The amino silane is preferably added after the polymerization of the addition polymer. The amino silane is added at a pH between 1.5 and 8, more particularly at a pH between 2 and 7. However, the amino silane can also be added during the polymerization. In addition, a combination of polymerizable vinyl silane and amino silane may be used, in which case the vinyl silane can be added during the polymerization and the amino silane after the polymerization.

The composition according to the invention is used as raw material for the adhesives industry, for coating materials such as synthetic plastering materials, coating agents for the building industry and paints.

The invention is further elucidated by means of the following examples without, however, being restricted thereto.

Example I

A mixture consisting of an aqueous pre-emulsion of the monomers styrene, butylacrylate, glycidylmethacrylate and acrylic acid (weight ratio 45/49/5/1) is polymerized at 80 °C with 2.5 %(wt), based on the monomers, of an anionic emulsifier (nonylphenol 10 ethylene oxide sulphate).

The metering time of the pre-emulsion is 3 hours.

After 2 hours' after-reaction at 85 °C, the dispersion formed is cooled to 25 °C and subsequently 1.25 %(wt) of gamma aminopropyltriethoxysilane, based on the addition polymer, is added. The pH, between 2.0 and 3.0, is brought to 5.0 using sodiumhydroxide. The dry solids content of the dispersion is 50 %. The minimum film-forming temperature (MFT) is 15 °C (measured according to DIN 53787).

Comparative example 1

The process of example I is repeated with the difference that 1.25 % of a vinyltris(2-methoxyethoxysilane) incorporated in the polymer is present instead of the aminosilane added to the emulsion after the polymerization.

Example II

These dispersions subsequently serve as the bases for tile adhesives with the following compositions:

| | |
|---|---|
| Dispersion according to examples I and 1 | 115 parts by weight |
| Water | 175 parts by weight |
| Methylhydroxyl cellulose thickener, Tylose MH 6000 XP ex Kalle Chemie | 3.7 parts by weight |
| Antifoam, Hercules 1512 M, ex Hercules | 1.0 parts by weight |
| Fungicide, Formaline | 2.7 parts by weight |
| Butylglycolacetate film former, ex UCC | 5.8 parts by weight |
| Quartz powder, Snowwhite, LZM, Mosa Maastricht | 676 parts by weight |
| Titanium white, Kronos A, ex Kronos Titan GmbH | 14 parts by weight |

This composition is mixed for ten minutes, upon which 8 parts by weight 2-amino-2-methylpropanol 95 % (ex Angus GmbH) and water are added in a weight ratio of 1 : 1.

Of these tile adhesives the tensile strength is determined with ceramic tiles, 5 × 5 cm, glued to concrete tiles (DIN 18156). Tile adhesives of a good dispersion may be required to have a wet tensile strength of at least 0.5 N/mm².

Result:

| | Tensile strength | |
|---|---|---|
| | dry in N/mm² | wet in N/mm² |
| I | 2.37 | 0.62 |
| 1 | 1.98 | 0.41 |

These examples show that the tensile strength requirement is complied with excellently by the addition, to the addition polymer, of an aminosilane according to the invention.

**Claims for the Contracting States: BE, CH, DE, FR, GB, IT, LI, LU, NL, SE**

1. Composition based on an aqueous dispersion of an addition polymer of one or more olefinically unsaturated monomers, an emulsion stabilizer and/or an emulsifier and a silicon compound, characterized in that the addition polymer comprises epoxy groups and that the silicon compound used is an aminosilane with the formula:

$$X - R^1 - Si \begin{matrix} \nearrow R^2 \\ - R^3 \\ \searrow R^4 \end{matrix}$$

where:
$X = NH_2$ or $-NH\text{-alkyl}(C_1\text{-}C_4)\text{-}NH_2$
$R^1$ = alkyl ($C_1$-$C_4$) or phenyl
$R^2$ = alkoxy ($C_1$-$C_4$),
alkyl ($C_1$-$C_4$) or phenyl
$R^3$ and $R^4$ = alkoxy ($C_1$-$C_4$) or OH.

2. Composition according to claim 1, characterized in that the relative amount of monomer units containing epoxy groups in the addition polymer is between 0.1 and 10 %(wt), based on the addition polymer.

3. Composition according to any one of claims 1-2, characterized in that 0.1-5 %(wt) of aminosilane, based on the addition polymer, is used.

4. Composition according to any one of claims 1-3, characterized in that the aminosilane used is an aminosilane with the formula

$$X - R^1 - Si \begin{matrix} \nearrow R^2 \\ - R^3 \\ \searrow R^4 \end{matrix}$$

where:
X = $NH_2$
$R^1$ = alkyl ($C_1$-$C_4$) and
$R^2 = R^3 = R^4$ = alkoxy ($C_1$-$C_4$).

5. Composition according to any one of claims 1-4, characterized in that the aminosilane used is gamma-aminopropyltriethoxysilane.

6. Composition according to any one of claims 1-5, characterized in that the applied monomer containing epoxy groups is glycidylacrylate or glycidylmethacrylate.

7. Composition according to any one of claims 1-6, characterized in that the aminosilane is added after the polymerization of the addition polymer.

8. Coating material obtained with the composition obtained according to any one of claims 1-7.

9. Adhesive obtained with the composition obtained according to any one of the claims 1-7.

**Claims for the Contracting State: AT**

1. Process for the preparation of a composition by mixing an aqueous dispersion of an addition polymer of one or more olefinically unsaturated monomers, an emulsion stabilizer and/or an emulsifier and a silicon compound, characterized in that the addition polymer comprises epoxy groups and that the silicon compound used is an aminosilane with the formula:

$$X - R^1 - Si \begin{matrix} \nearrow R^2 \\ - R^3 \\ \searrow R^4 \end{matrix}$$

where:
X = $NH_2$ or -NH-alkyl($C_1$-$C_4$)-$NH_2$
$R^1$ = alkyl ($C_1$-$C_4$) or phenyl
$R^2$ = alkoxy ($C_1$-$C_4$),
alkyl ($C_1$-$C_4$) or phenyl
$R^3$ and $R^4$ = alkoxy ($C_1$-$C_4$) or OH.

2. Process for the preparation of a composition according to claim 1, characterized in that the relative amount of monomer units containing epoxy groups in the addition polymer is between 0.1 and %(wt), based on the addition polymer.

3. Process for the preparation of a composition according to any one of claims 1-2, characterized in that 0.1-5 %(wt) of aminosilane, based on the addition polymer, is used.

4. Process for the preparation of a composition according to any one of claims 1-3, characterized in that the aminosilane used is an aminosilane with the formula

$$X - R^1 - Si \begin{matrix} \nearrow R^2 \\ - R^3 \\ \searrow R^4 \end{matrix}$$

where:
X = $NH_2$
$R^1$ = alkyl ($C_1$-$C_4$) and
$R^2 = R^3 = R^4$ = alkoxy ($C_1$-$C_4$).

5. Process for the preparation of a composition according to any one of claims 1-4, characterized in that the aminosilane used is gamma-aminopropyltriethoxysilane.

6. Process for the preparation of a composition according to any one of claims 1-5, characterized in that the applied monomer containing epoxy groups is glycidylacrylate or glycidylmethacrylate.

7. Process for the preparation of a composition according to any one of claims 1-6, characterized in that the aminosilane is added after the polymerization of the addition polymer.

8. Coating material obtained with the composition obtained according to any one of claims 1-7.

9. Adhesive obtained with the composition obtained according to any one of the claims 1-7.

**Patentansprüche für die Vertragsstaaten: BE, CH, DE, FR, GB, IT, LI, LU, NL, SE**

1. Zusammensetzung auf Basis einer wässerigen Dispersion eines Additionspolymers eines oder mehrerer olefinisch ungesättigter Monomere, eines Emulsionsstabilisators und/oder eines Emulgators und einer Siliziumverbindung, dadurch gekennzeichnet, daß das Additionspolymer Epoxygruppen umfaßt und daß die verwendete Siliziumverbindung ein Aminosilan der Formel

$$X - R^1 - Si \begin{matrix} \diagup R^2 \\ - R^3 \\ \diagdown R^4 \end{matrix}$$

ist, worin
X $NH_2$ oder $-NH-(C_1-C_4)Alkyl-NH_2$ bedeutet,
$R^1$ $(C_1-C_4)$Alkyl oder Phenyl ist,
$R^2$ $(C_1-C_4)$Alkoxy, $(C_1-C_4)$Alkyl oder Phenyl darstellt und
$R^3$ und $R^4$ $(C_1-C_4)$Alkoxy oder OH sind.

2. Zusammensetzung nach Anspruch 1, dadurch gekennzeichnet, daß die relative Menge von Epoxygruppen enthaltenden Monomereinheiten im Additionspolymer 0,1 bis 10% (Gew.), bezogen auf das Additionspolymer, beträgt.

3. Zusammensetzung nach einem der Ansprüche 1 bis 2, dadurch gekennzeichnet, daß 0,1 bis 5% (Gew.) Aminosilan, bezogen auf das Additionspolymer, verwendet werden.

4. Zusammensetzung nach einem der Ansprüche 1 bis 3, dadurch gekennzeichnet, daß das verwendete Aminosilan ein Aminosilan der Formel

$$X - R^1 - Si \begin{matrix} \diagup R^2 \\ - R^3 \\ \diagdown R^4 \end{matrix}$$

ist, worin
X $NH_2$ bedeutet,
$R^1$ $(C_1-C_4)$Alkyl ist und
$R^2 = R^3 = R^4 = (C_1-C_4)$Alkoxy.

5. Zusammensetzung nach einem der Ansprüche 1 bis 4, dadurch gekennzeichnet, daß das verwendete Aminosilan $\gamma$-Aminopropyltriäthoxysilan ist.

6. Zusammensetzung nach einem der Ansprüche 1 bis 5, dadurch gekennzeichnet, daß das verwendete Epoxygruppen enthaltende Monomer Glycidylacrylat oder Glycidylmethacrylat ist.

7. Zusammensetzung nach einem der Ansprüche 1 bis 6, dadurch gekennzeichnet, daß das Aminosilan nach der Polymerisation des Additionspolymers zugesetzt wird.

8. Überzugsmaterial, erhalten mit der Zusammensetzung nach einem der Ansprüche 1 bis 7.

9. Klebstoff, erhalten mit der Zusammensetzung nach einem der Ansprüche 1 bis 7.

**Patentansprüche für den Vertragsstaat: AT**

1. Verfahren zur Herstellung einer Zusammensetzung durch Mischen einer wässerigen Dispersion eines Additionspolymers eines oder mehrerer olefinisch ungesättigter Monomere, eines Emulsionsstabilisators und/oder eines Emulgators und einer Siliziumverbindung, dadurch gekennzeichnet, daß das Additionspolymer Epoxygruppen umfaßt und daß die verwendete Siliziumverbindung ein Aminosilan der Formel

$$X - R^1 - Si \begin{matrix} \diagup R^2 \\ - R^3 \\ \diagdown R^4 \end{matrix}$$

ist, worin
X $NH_2$ oder $-NH-(C_1-C_4)Alkyl-NH_2$ bedeutet,
$R^1$ $(C_1-C_4)$Alkyl oder Phenyl ist,
$R^2$ $(C_1-C_4)$Alkoxy, $(C_1-C_4)$Alkyl oder Phenyl darstellt und
$R^3$ und $R^4$ $(C_1-C_4)$Alkoxy oder OH sind.

2. Verfahren zur Herstellung einer Zusammensetzung nach Anspruch 1, dadurch gekennzeichnet, daß die relative Menge von Epoxygruppen enthaltenden Monomereinheiten im Additionspolymer 0,1 bis 10% (Gew.), bezogen auf das Additionspolymer, beträgt.

3. Verfahren zur Herstellung einer Zusammensetzung nach einem der Ansprüche 1 bis 2, dadurch gekennzeichnet, daß 0,1 bis 5% (Gew.) Aminosilan, bezogen auf das Additionspolymer, verwendet werden.

4. Verfahren zur Herstellung einer Zusammensetzung nach einem der Ansprüche 1 bis 3, dadurch gekennzeichnet, daß das verwendete Aminosilan ein Aminosilan der Formel

$$X - R^1 - Si \begin{matrix} R^2 \\ - R^3 \\ R^4 \end{matrix}$$

ist, worin
X $NH_2$ bedeutet,
$R^1$ $(C_1–C_4)$Alkyl ist und
$R^2 = R^3 = R^4 = (C_1–C_4)$Alkoxy.

5. Verfahren zur Herstellung einer Zusammensetzung nach einem der Ansprüche 1 bis 4, dadurch gekennzeichnet, daß das verwendete Aminosilan γ-Aminopropyltriäthoxysilan ist.

6. Verfahren zur Herstellung einer Zusammensetzung nach einem der Ansprüche 1 bis 5, dadurch gekennzeichnet, daß das verwendete Epoxygruppen enthaltende Monomer Glycidylacrylat oder Glycidylmethacrylat ist.

7. Verfahren zur Herstellung einer Zusammensetzung nach einem der Ansprüche 1 bis 6, dadurch gekennzeichnet, daß das Aminosilan nach der Polymerisation des Additionspolymers zugesetzt wird.

8. Überzugsmaterial, erhalten mit der nach einem der Ansprüche 1 bis 7, erhaltenen Zusammensetzung.

9. Klebstoff, erhalten mit der nach einem der Ansprüche 1 bis 7 erhaltenen Zusammensetzung.

**Revendications pour les Etats contractants: BE, CH, DE, FR, GB, IT, LI, LU, NL, SE**

1. Composition à base d'une dispersion aqueuse d'un polymère d'addition d'un ou plusieurs monomère(s) à insaturation oléfinique, un stabilisant d'émulsion et/ou un émulsifiant et un composé de silicium, caractérisée en ce que le polymère d'addition comprend des groupes époxy et en ce que le composé de silicium utilisé est un aminosilane de formule:

$$X - R^1 - Si \begin{matrix} R^2 \\ - R^3 \\ R^4 \end{matrix}$$

dans laquelle:
$X = NH_2$ ou $–NH–alkyl(C_{1-4})–NH_2$
$R^1$ = alkyle $(C_{1-4})$ ou phényle
$R^2$ = alcoxy $(C_{1-4})$, alkyle $(C_{1-4})$ ou phényle
$R^3$ et $R^4$ = alcoxy $(C_{1-4})$ ou OH.

2. Composition selon la revendication 1, caractérisée en ce que la quantité relative des motifs monomères contenant des groupes époxy dans le polymère d'addition est comprise entre 0,1 et 10% par rapport au poids des polymères d'addition.

3. Composition selon la revendication 1 ou 2, caractérisée en ce qu'on utilise 0,1 à 5% en poids d'aminosilane par rapport au polymère d'addition.

4. Composition selon l'une quelconque des revendications 1 à 3, caractérisée en ce que l'aminosilane utilisé est un aminosilane de formule:

$$X - R^1 - Si \begin{matrix} R^2 \\ - R^3 \\ R^4 \end{matrix}$$

dans laquelle
$X = NH_2$
$R^1$ = alkyle $(C_{1-4})$ et
$R^2 = R^3 = R^4$ = alcoxy $(C_{1-4})$.

5. Composition selon l'une quelconque des revendications 1 à 4, caractérisée en ce que l'amino-silane utilisé est le gamme-aminopropyltriéthoxysilane.

6. Composition selon l'une quelconque des revendications 1 à 5, caractérisée en ce que le monomère appliqué contenant des groupes éthoxy est l'acrylate de glycidyle ou le méthacrylate de glycidyle.

7. Composition selon l'une quelconque des revendications 1 à 6, caractérisée en ce que l'aminosilane est ajouté après la polymérisation du polymère d'addition.

8. Matière d'enduction qu'on obtient avec la composition selon l'une quelconque des revendications 1 à 7.

9. Adhésif qu'on obtient avec la composition selon l'une quelconque des revendications 1 à 7.

**Revendications pour l'Etat contractant: AT**

1. Procédé de préparation d'une composition consistant à mélanger une dispersion aqueuse d'un polymère d'addition d'un ou plusieurs monomère(s) à insaturation oléfinique, un stabilisant d'émulsion et/ou un émulsifiant et un composé de silicium, caractérisé en ce que le polymère d'addition comprend des groupes époxy et en ce que le composé de silicium utilisé est un aminosilane de formule:

$$X - R^1 - Si \begin{matrix} \nearrow R^2 \\ - R^3 \\ \searrow R^4 \end{matrix}$$

dans laquelle:
$X = NH_2$ ou $-NH-alkyl(C_{1-4})-NH_2$
$R^1$ = alkyle ($C_{1-4}$) ou phényle
$R^2$ = alcoxy ($C_{1-4}$), alkyle ($C_{1-4}$) ou phényle
$R^3$ et $R^4$ = alcoxy ($C_{1-4}$) ou OH.

2. Procédé de préparation d'une composition selon la revendication 1, caractérisé en ce que la proportion relative de motifs monomères contenant des groupes époxy dans le polymère d'addition est comprise entre 0,1 et 10% par rapport au poids du polymère d'addition.

3. Procédé de préparation d'une composition selon la revendication 1 ou 2, caractérisé en ce qu'on utilise de 0,1 à 5% d'aminosilane par rapport au poids du polymère d'addition.

4. Procédé de préparation d'une composition selon l'une quelconque des revendications 1 à 3, caractérisé en ce que l'aminosilane utilisé est un aminosilane de formule:

dans laquelle
$X = NH_2$
$R^1$ = alkyle ($C_{1-4}$) et
$R^2 = R^3 = R^4$ = alcoxy ($C_{1-4}$).

5. Procédé de préparation d'une composition selon l'une quelconque des revendications 1 à 4, caractérisé en ce que l'aminosilane utilisé est le gamma-aminopropyltriéthoxysilane.

6. Procédé de préparation d'une composition selon l'une quelconque des revendications 1 à 5, caractérisé en ce que le monomère contenant des groupes époxy est l'acrylate de glycidyle ou le méthacrylate de glycidyle.

7. Procédé de préparation d'une composition selon l'une quelconque des revendications 1 à 6, caractérisé en ce qu'on ajoute l'aminosilane après la polymérisation du polymère d'addition.

8. Matière d'enduction qu'on obtient avec la composition obtenue selon l'une quelconque des revendications 1 à 7.

9. Adhésif qu'on obtient avec la composition obtenue selon l'une quelconque des revendications 1 à 7.